# FASCICULE DE BREVET EUROPEEN

(11) **EP 2 687 749 B1**
(45) Date de publication et mention de la délivrance du brevet: **30.09.2015**
(21) Numéro de dépôt: 13175634.8
(22) Date de dépôt: 08.07.2013
(51) Int. Cl.: F16F 15/14

(54) **Dispositif d'amortissement de torsion à pendule**
Torsionsdämpfer mit Pendelmasse
Torsional damper with pendular mass

(30) Priorité: 20.07.2012 FR 1257073
(43) Date de publication de la demande: 22.01.2014
(73) Titulaire: Valeo Embrayages, 80009 Amiens Cedex 2 (FR)
(72) Inventeur: Verhoog, Roel, 60190 Gournay Sur Aronde (FR); Mahe, Hervé, 804480 Salouel (FR)
(74) Mandataire: Tran, Chi-Hai

(56) Documents cités:
- DE-A1-102008 059 297
- DE-A1-102011 086 532

## Description

La présente invention concerne un dispositif d'amortissement de torsion destiné à être relié à un moteur à explosion, de type oscillateur pendulaire.

On connaît dans l'état de la technique des dispositifs d'amortissement de torsion de type pendulaire, encore appelés oscillateurs pendulaires ou pendules, qui équipent notamment mais non exclusivement la transmission d'un véhicule automobile.

Dans une transmission de véhicule automobile, on associe généralement au moins un dispositif d'amortissement de torsion à un embrayage apte à relier sélectivement le moteur à la boîte de vitesses, tel qu'un embrayage à friction ou un dispositif d'accouplement hydrocinétique comportant un embrayage de verrouillage, et cela afin de filtrer les vibrations dues aux acyclismes du moteur.

En effet, un moteur à explosion présente des acyclismes du fait des explosions se succédant dans le cylindre du moteur, ces acyclismes variant notamment en fonction du nombre de cylindres.

Les moyens amortisseurs d'un dispositif d'amortissement de torsion ont par conséquent pour fonction de filtrer les vibrations engendrées par les acyclismes et interviennent avant la transmission du couple moteur à la boîte de vitesses.

A défaut, des vibrations pénétrant dans la boîte de vitesses y provoqueraient en fonctionnement des chocs, bruits ou nuisances sonores particulièrement indésirables.

C'est une des raisons pour lesquelles, on utilise un ou plusieurs moyens d'amortissement aptes à filtrer les vibrations à au moins une fréquence déterminée.

Le document US-2010/0122605 représente un dispositif d'amortissement de type pendulaire.

Le dispositif d'amortissement comprend un support, couplé en rotation à un arbre du moteur, et au moins une paire de masselottes, généralement plusieurs paires de masselottes réparties circonférentiellement sur le support. Les oscillations des masselottes génèrent un couple oscillant qui s'oppose au couple oscillant venant du moteur et ainsi absorbe une partie des acyclismes du moteur.

Les paires de masselottes sont agencées autour de l'axe de rotation de l'arbre moteur et le centre de masse de chaque paire de masselottes est libre d'osciller autour d'un axe d'oscillation sensiblement parallèle à l'axe de rotation de l'arbre moteur et entraîné en rotation autour de cet axe de rotation.

En réaction aux irrégularités de rotation, les masselottes se déplacent de manière à ce que le centre de masse de chacune d'elles oscille autour de cet axe d'oscillation.

La position radiale du centre de masse de chacune des masselottes par rapport à l'axe de rotation de l'arbre moteur, comme la distance de ce centre de gravité par rapport à l'axe d'oscillation, sont établies de manière à ce que, sous l'effet des forces centrifuges, la fréquence d'oscillation de chacune des masselottes soit proportionnelle à la vitesse de rotation de l'arbre moteur, ce multiple pouvant par exemple prendre une valeur proche du rang de l'harmonique prépondérant des acyclismes.

Par ailleurs, le document DE10 2011 086 532 A1, qui est considéré comme le document le plus pertinent, décrit également un tel dispositif amortisseur de torsion.

La recherche d'une filtration des vibrations toujours plus performante conduit à perfectionner les dispositifs d'amortissement de torsion de type pendulaire.

La théorie des dispositifs d'amortissement de torsion de type pendulaire a été explorée de façon très approfondie par H. Denman, notamment dans le document : «Tautochronic bifilar pendulum torsion absorbers for reciprocating engines », Journal of Sound and Vibrations (1992) 159(2). 251-277 (« Amortisseurs de torsion à pendule bifilaire tautochrone pour moteurs alternatifs », Journal du son et des vibrations).

La théorie assimile les acyclismes moteur à une fonction d'excitation en torsion sinusoïdale, pouvant être amortie par un pendule bifilaire comprenant une masse pendulaire reliée à un support par plusieurs éléments de roulement, typiquement des rouleaux. Cette théorie propose une méthode, qui permet de déterminer l'ensemble des éléments du dispositif pendulaire et comprend cinq étapes principales :
1) calcul des constantes: rayon de courbure de la trajectoire à l'équilibre; paramètres de la trajectoire (par exemple l'épicycloïde); abscisse curviligne au point de rebroussement; rayon de courbure de la découpe sur le support; rayon de courbure de la découpe sur la masselotte;
2) calcul de l'abscisse curviligne et de l'angle tangent à la trajectoire;
3) calcul de déplacement du centre de gravité de la masse pendulaire;
4) calcul de déplacement du centre de gravité d'un rouleau;
5) calcul des chemins (souvent également appelés « traces »).

Chaque chemin, ou trace, est le lieu géométrique, dans un plan radial, des points de contact entre soit un élément de roulement et une masselotte, sur un bord solidaire de cette masselotte, soit un élément de roulement et le support, sur un bord de ce support.

Ces chemins, qui déterminent la forme géométrique des zones de roulement, sur les masselottes d'une part, et sur le support d'autre part, sont typiquement des fractions d'épicycloïde, et chaque chemin est symétrique par rapport à un axe médian passant par un point central.

On connaît cependant, notamment d'après la demande de brevet DE 10 2011 016 568 A1, un dispositif d'amortissement de torsion à pendule centrifuge comprenant des chemins non symétriques, une portion d'un chemin ayant une courbure plus prononcée qu'une autre portion adjacente de ce chemin, afin d'éviter des phénomènes de glissement de l'élément de roulement correspondant. Les chemins correspondant à l'un des éléments de roulement sont non superposables par translation et/ou rotation aux chemins correspondant à l'autre élément de roulement, mais sont au contraire symétriques de ces derniers chemins par rapport à un plan axial médian.

L'invention a notamment pour but de réaliser une meilleure filtration des vibrations résultant des acyclismes moteur, à partir notamment d'une meilleure évaluation de ces acyclismes.

A cet effet, l'invention a pour objet un dispositif d'amortissement de torsion destiné à être relié à un moteur à explosion, ce dispositif comprenant au moins une première masselotte pendulaire à oscillation périodique montée mobile sur un support mobile en rotation autour d'un axe, et au moins deux éléments de roulement, chacun d'entre eux étant en contact roulant avec un chemin sur un bord solidaire de la première masselotte d'une part et avec un chemin sur un bord du support d'autre part, chacun de ces chemins comprenant au moins deux sous-chemins jointifs de part et d'autre d'un point de jonction, respectivement à gauche et à droite de ce point de jonction, les deux sous-chemins d'un même chemin étant non symétriques;
**caractérisé en ce** que
les deux sous-chemins à gauche sur les bords solidaires de la première masselotte sont superposables deux à deux par translation et/ou rotation autour de l'axe;
- les deux sous-chemins à droite sur les bords solidaires de la première masselotte sont superposables deux à deux par translation et/ou rotation autour de l'axe;
- les deux sous-chemins à gauche sur les bords du support sont superposables deux à deux par translation et/ou rotation autour de l'axe;
- les deux sous-chemins à droite sur les bords du support sont superposables deux à deux par translation et/ou rotation autour de l'axe;
- les deux sous-chemins à gauche sur les bords solidaires de la première masselotte, et les deux sous-chemins à droite sur les bords du support sont conformés pour amortir les vibrations de torsion correspondant, pour une vitesse de rotation donnée du support (2), à une première fonction périodique d'excitation en torsion générée par le moteur pendant une première sous-période de chaque période moteur,
- les deux sous-chemins à droite sur les bords solidaires de la première masselotte, et les deux sous-chemins à gauche sur les bords du support sont conformés pour amortir les vibrations de torsion correspondant, pour la même vitesse de rotation du support (2), à une deuxième fonction périodique d'excitation en torsion générée par le moteur pendant une deuxième sous-période de chaque période moteur, adjacente à la première sous-période, la première et la seconde fonction périodique présentant des périodes différentes pour cette même vitesse de rotation du support (2)..

On a en effet trouvé que contrairement à ce que suggère l'état de la technique, l'excitation de torsion correspondant à un acyclisme d'un moteur à explosion n'était pas sensiblement sinusoïdale, mais pouvait être décomposée (au niveau de sa représentation graphique) en tronçons successifs de deux ou plusieurs fonctions périodiques de périodes différentes. Cette décomposition ne correspond typiquement pas à une superposition, mais à une succession répétée et périodique de « motifs d'excitation en torsion » chaque motif comprenant la juxtaposition, pendant deux sous-périodes successives, de deux fonctions d'excitation ayant des périodes différentes et variant en fonction du régime moteur (typiquement différentes entre elles et également de celle du moteur). Pour chaque régime moteur (ou dans un langage courant, pour chaque vitesse de rotation du moteur, c'est à dire de l'arbre moteur entraîné par le vilebrequin), le dispositif selon l'invention filtre les vibrations correspondant à ces deux fonctions d'excitation, grâce à une décomposition adaptée des zones de roulement et chemins correspondant à ces deux fonctions d'excitation en torsion: Lorsque l'on se trouve dans un intervalle temporel élémentaire (première sous-période) correspondant à une première fonction d'excitation en torsion, chaque élément de roulement roule en contact avec une première partie d'un chemin sur un bord solidaire de la première masselotte et d'un chemin sur un bord du support, aptes à filtrer les vibrations induites par la première fonction périodique d'excitation. Dans l'intervalle de temps élémentaire suivant (deuxième sous-période), correspondant à une deuxième fonction périodique d'excitation en torsion, chaque élément de roulement roule en contact avec une deuxième partie d'un chemin sur un bord solidaire de la première masselotte et d'un chemin sur un bord du support, aptes à filtrer les vibrations induites par la deuxième fonction périodique d'excitation.

Lorsque le régime moteur change, le dispositif d'amortissement de torsion s'adapte, et permet d'amortir les acyclismes correspondant au nouveau régime moteur. Les périodes des deux fonctions périodiques d'excitation évoluent, tout en restant différentes entre elles, et les chemins et sous-chemins précités restent adaptés pour amortir les acyclismes de ce nouveau régime moteur.

Typiquement, chacune des première et deuxième fonctions périodiques d'excitationest une fonction sinusoïdale. Chaque « motif d'excitation en torsion » comprend donc alors (au niveau de sa représentation graphique) deux tronçons accolés de sinusoïdes de périodes (ou fréquences) différentes pour un régime moteur donné.

Tout mode de détermination de la géométrie de la partie d'un chemin adaptée à une fonction d'excitation en torsion déterminée peut être utilisée. On peut également suivre la méthode classique de détermination d'un chemin, ce qui conduit alors, dans le cas du dispositif selon l'invention, à ce que chacun des sous-chemins est formé par une portion d'épicycloïde.

Le cas échéant, chacun des points de jonction est un point de contact à l'équilibre d'un élément de roulement avec la première masselotte ou avec le support, lorsque le support est entraîné en rotation à vitesse constante.

Selon une disposition préférée, la première sous période est un intervalle de temps de durée maximale compris dans une période moteur au cours duquel le couple moteur est positif ou nul, et la deuxième sous-période est un intervalle de temps de durée maximale compris dans une période moteur au cours duquel le couple moteur est négatif. On a trouvé en effet que l'excitation en torsion pendant les phases lors desquelles le couple moteur est positif, ou positif ou nul, n'était pas de même durée, que celle correspondant aux phases de couple négatif, ou négatif ou nul.

Typiquement, la première et la seconde fonction périodique d'excitation présentent, pour une pluralité de vitesses de rotation du support (2), des fréquences respectives telles que le rapport des fréquences de la première et la deuxième fonction périodique d'excitation, à vitesse de rotation du support identique, est compris entre 0,66 et 0,97.

En général, pour un moteur à n cylindres, lorsque le moteur et le support (2) tournent à une même fréquence de 50 Hz, la première fonction périodique d'excitation est de fréquence comprise entre environ 40 n/2 et 49 n/2 et la deuxième fonction périodique est de fréquence comprise entre environ 51 n/2 et 60 n/2 Hz.

A titre d'exemple, pour un moteur à quatre cylindres, lorsque le régime moteur est de 3000 tours/minute (correspondant à une fréquence de 50 Hz) et que le support tourne à cette même vitesse de rotation, la période moteur peut être divisée en quatre sous-périodes. La première et la troisième sous-périodes sont assimilables à des demi-périodes d'une fonction sinusoïdale de fréquence comprise entre environ 80 et 98 Hz alors que la deuxième et la quatrième sous-périodes sont assimilables à des demi-périodes de fréquence comprise entre environ 102 et 120 Hz.

Selon un premier mode de réalisation du dispositif selon l'invention, chacun des éléments de roulement possède un axe de roulement, et les droites joignant perpendiculairement un point de contact d'un élément de roulement à l'axe de roulement correspondant sont parallèles. On dit alors typiquement que le dispositif est du type pendule à fils parallèles.

Selon un deuxième mode de réalisation du dispositif selon l'invention, chacun des éléments de roulement possède un axe de roulement, et les droites joignant perpendiculairement un point de contact d'un élément de roulement à l'axe de roulement correspondant sont convergentes. On dit alors que le dispositif est du type pendule à fils convergents, ou divergents selon la position du point commun des deux droites. Ce mode de réalisation permet de réaliser un mouvement combiné de rotation et de translation des masselottes d'un pendule. Ainsi, la masse et/ou le débattement des masselottes pendulaires peut-être augmenté pour un encombrement donné.

Le dispositif comprend typiquement, pour chaque première masselotte, une seconde masselotte associée. Cette seconde masselotte pendulaire à oscillation périodique, est typiquement solidaire de la première masselotte et également montée mobile sur les deux mêmes éléments de roulement, de façon à ce que le support soit intercalé entre les première et seconde masselottes, chaque élément de roulement étant en contact roulant avec d'une part un chemin sur un bord solidaire de la seconde masselotte, superposable et symétrique avec un chemin sur un bord solidaire de la première masselotte (les chemins pouvant donc aussi être identiques et confondus pour les deux masselottes), et d'autre part avec le chemin correspondant sur un bord du support.

Les éléments de roulement sont typiquement des rouleaux cylindriques à section circulaire.

Selon une variante de réalisation de ces éléments de roulement, le dispositif comprend une seconde masselotte pendulaire à oscillation périodique, solidaire de la première masselotte et également montée mobile sur les deux éléments de roulement de façon à ce que le support soit intercalé entre les première et seconde masselottes chacun des éléments de roulement comprenant une première partie cylindrique de section circulaire ayant un premier diamètre, pour le contact roulant avec la première masselotte, une seconde partie cylindrique de section circulaire de second diamètre égal au premier diamètre, pour le contact roulant avec la seconde masselotte, et une troisième partie cylindrique de section circulaire, ayant un troisième diamètre différent du premier diamètre, intercalée entre la première et la seconde partie cylindrique, pour le contact roulant avec le support.

Le troisième diamètre peut être supérieur, ou inférieur au premier diamètre.

Généralement, les deux éléments de roulement d'un même pendule ont des premiers diamètres identiques et des troisièmes diamètres identiques. Typiquement, ils sont identiques.

Un autre objet de l'invention est un embrayage, simple, double, ou multiple comprenant un dispositif d'amortissement de torsion, tel que précédemment défini.

L'invention sera mieux comprise à la lecture de la description qui va suivre, donnée uniquement à titre d'exemple et faite en se référant aux dessins dans lesquels :
- La figure 1 représente en perspective une vue partielle d'un élément d'embrayage comprenant un support de pendule et plusieurs masselottes pendulaires montées sur ce support.
- La figure 2 représente en perspective une vue partielle d'un élément d'embrayage comprenant un support de pendule et un élément de roulement roulant sur une pièce intermédiaire pour la solidarisation de deux masselottes pendulaires montées sur ce support.
- La figure 3 représente une vue partielle d'un élément d'embrayage comprenant un support de pendule et deux éléments de roulement roulant sur deux pièces intermédiaires pour la solidarisation de deux masselottes pendulaires montées sur ce support.

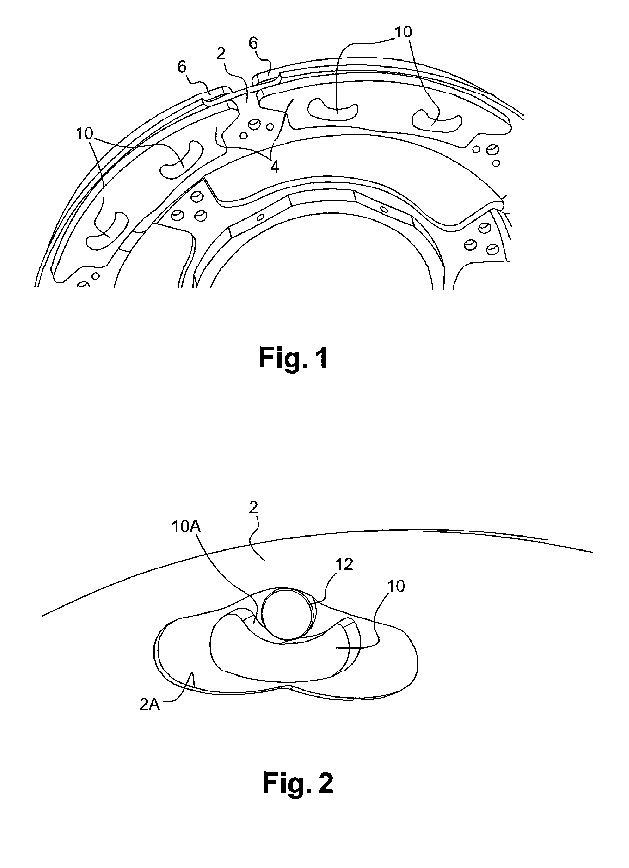

On a représenté sur la figure 1 un support 2 pour une pluralité de pendules répartis circonférentiellement sur ce support 2, par exemple une rondelle de phasage d'un amortisseur de torsion. Le support 2 a une forme générale plane annulaire.

La figure 1 représente deux premières masselottes 4, et deux secondes masselottes 6, chaque première masselotte étant disposée sur une face du support, et associée à une seconde masselotte disposée sur une seconde face du support 2 opposée à la première face. Deux masselottes 4 et 6 associées en vis-à-vis sont solidaires entre elles, chacune étant montée solidaire de deux éléments de liaison 10, qui s'étendent chacun typiquement de façon axiale par rapport à l'axe du support 2.

La figure 2 représente en perspective le support 2, un élément de liaison 10, et un élément de roulement 12, formé par un rouleau cylindrique de section circulaire, apte à rouler sur un chemin sur un bord 10A de l'élément de liaison 10 d'une part, et sur un bord 2A du support 2 d'autre part. Le bord 2A délimite un évidement du support 2 permettant le passage de l'élément de liaison 10 et de l'élément de roulement 12.

L'ensemble formé par une première masselotte 4, une seconde masselotte 6 associée à la première masselotte, et les deux éléments de liaison 10 correspondants constitue un pendule apte à osciller sur le support 2.

Chacune des masselottes oscille en contact avec un chemin disposé dans un plan radial, sur un bord de l'élément de liaison 10. Dans le plan radial, ce chemin, encore appelé trace, correspond à l'ensemble des points de contact avec l'élément de roulement 12. De même, l'ensemble des points de contact de l'élément de roulement 12 avec le support 2, forme un autre chemin, sur un bord du support.

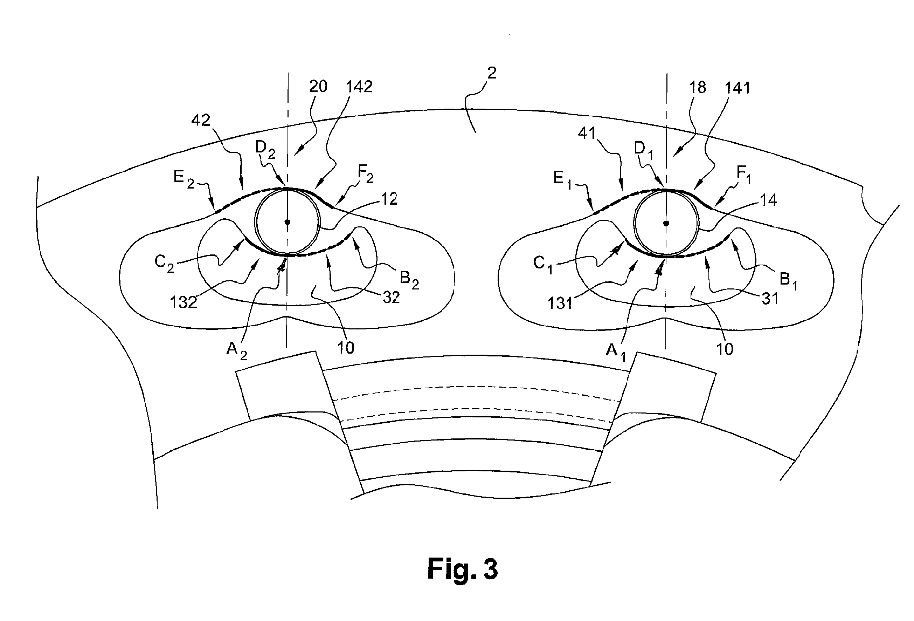

On se réfère maintenant à la figure 3, qui représente en vue axiale une partie du support 2 comprenant deux évidements, permettant le passage des deux éléments axiaux de liaison 10 et des deux éléments de roulement 12 et 14, chacun des éléments axiaux de liaison 10 permettant de solidariser (entre elles et avec l'élément de liaison 10 correspondant) une première masselotte et une seconde masselotte, non représentées sur cette figure, disposées en vis-à-vis sur les deux faces opposées du support 2. Chacun des éléments de roulement, 12 et 14 est apte à rouler d'une part le long d'un chemin sur un bord d'un élément de liaison 10 solidaire notamment de la première masselotte, et d'autre part le long d'un chemin sur un bord du support 2. En variante, l'élément de liaison 10 pourrait ne former qu'un élément unique avec la première masselotte, le chemin étant alors celui d'un bord de la masselotte, et donc également solidaire de cette masselotte.

En particulier, on peut également prévoir que les chemins sur les bords solidaires des masselottes au sens de la présente description soient formés dans des orifices ménagés directement dans les masselottes comme indiqué dans le document DE 10 2011 016 568.

La figure 3 représente la position des éléments de roulement 12 et 14, du support 2, et des deux éléments de liaison 10 en position neutre, c'est-à-dire lorsque le support 2 est entraîné à vitesse uniforme. Le premier élément de roulement 14 se trouve alors en contact avec l'élément de liaison 10 correspondant au point A1, et en contact avec le support au point D1, diamétralement opposé par rapport à l'élément de roulement 14.

Au cours d'une oscillation du pendule, et donc notamment de la première masselotte, le premier élément de roulement 14 va osciller en contact, dans un plan radial, avec un chemin sur un bord de l'élément de liaison 10 autour du point A1, jusqu'aux positions extrêmes correspondant au points B1 et C1. La courbe C1-A1-B1 représente donc le chemin des points de contact du premier élément de roulement 14 sur un bord de l'élément de liaison 10 correspondant, cet élément de liaison 10 étant notamment solidaire de la première et de la seconde masselotte. Ce chemin peut être décomposé en deux sous-chemins, 31 et 131, respectivement sous-chemin à droite 31 (A1-B1 en trait pointillé) et sous chemin à gauche (C1-A1 en trait gras).

De même, au cours d'une oscillation du pendule, et donc notamment de la première masselotte, le premier élément de roulement 14 va osciller en contact, dans un plan radial, avec un chemin sur un bord du support autour du point D1, jusqu'aux positions extrêmes correspondant au points E1 et F1. La courbe E1-D1-F1 représente donc le chemin dans un plan radial des points de contact du premier élément de roulement 14 sur un bord du support. Ce chemin peut être décomposé en deux sous-chemins, 41 et 141, respectivement sous-chemin à gauche 41 (E1-D1 en trait pointillé) et sous chemin à droite (D1-F1 en trait gras).

De façon analogue, le second élément de roulement 12 oscille en contact avec le chemin E2-D2-F2 sur un bord du support 2, autour du point D2 de contact à l'équilibre, les points E2 et F2 étant les points de contacts extrêmes du chemin. Ce chemin délimite deux sous-chemins, un sous-chemin à droite 142 (D2-F2 en trait gras), et un sous-chemin à gauche (E2-D2 en trait pointillé).

De façon analogue, le second élément de roulement 12 oscille en contact avec le chemin C2-A2-B2 sur un bord de l'élément de liaison correspondant 10, autour du point A2 de contact à l'équilibre, les points C2 et B2 étant les points de contacts extrêmes du chemin. Ce chemin délimite deux sous-chemins, un sous-chemin à droite 32 (A2-B2 en trait gras), et un sous-chemin à gauche (C2-A2 en trait pointillé).

Les deux sous-chemins d'un même chemin, par rapport à leur point de jonction respectif (A1, D1, A2, D2) ne sont pas symétriques ni superposables, contrairement à leur disposition selon l'art antérieur le plus courant.

Ainsi, deux sous-chemins jointifs de part et d'autre d'un point de jonction (l'un en trait gras, et l'autre en trait pointillé) ne sont pas symétriques ni superposables. Plus précisément, les sous-chemins 31 et 131, 41 et 141, 32 et 132, 42 et 142 ne sont pas symétriques ni superposables à l'intérieur d'un même groupe de sous-chemins (par exemple 31 et 131).

Par contre, les deux sous-chemins à droite sur un bord du support, 141 et 142 sont superposables par translation et/ou rotation autour de l'axe du support, ainsi que les deux sous-chemins à gauche 41 et 42.

De même, les deux sous-chemins à droite 31 et 32 sur un bord de l'élément de liaison 10 solidaire de la première masselotte sont superposables par translation et/ou rotation autour de l'axe du support, ainsi que les deux sous-chemins à gauche 131 et 132.

En fait, les huit sous-chemins se répartissent en deux catégories : d'une part les sous chemins en traits pointillés sur la figure 3 : 31, 41, 32, 42, et d'autre part les sous-chemins en traits gras 131, 141, 132, 142.

Lors d'une première sous période d'oscillation, lorsque le pendule (la première masselotte, la seconde masselotte, et chacun des éléments de liaison 10) oscille vers la gauche sur la figure 3, les points de contact des deux éléments de roulement avec le support et les deux éléments de liaison 10 sont situés sur les sous chemins en traits pointillés : 31, 41, 32, 42. En position extrême, les points de contacts (simultanés) des deux éléments de roulement coïncident avec les points B1, E1, B2, E2.

Lors d'une seconde sous période d'oscillation, complémentaire de la première période, lorsque le pendule oscille vers la droite sur la figure 3, les points de contact des deux éléments de roulement avec le support et les deux éléments de liaison 10 sont au contraire situés sur les sous-chemins en traits gras : 131, 141, 132, 142. En position extrême, les points de contacts (simultanés) des deux éléments de roulement coïncident avec les points C1, F1, C2, F2.

Le dispositif selon l'invention met en oeuvre des sous-chemins de géométrie différente pour chacune des deux sous-périodes de la période d'oscillation, adaptés pour amortir les vibrations générés par des excitations de torsion correspondant à deux fonctions périodiques de périodes différentes.

On a trouvé en effet que l'excitation en torsion pendant les phases lors desquelles le couple moteur est positif, ou positif ou nul, n'était pas de même période, ou fréquence, que celle correspondant aux phases lors desquelles le couple est négatif, ou négatif ou nul.

Le dispositif selon l'invention met donc en oeuvre des chemins adaptés d'une part à amortir les vibrations correspondant à une première fonction d'excitation de torsion (les sous-chemins en traits gras : 131, 141, 132, 142, pouvant correspondre en particulier aux sous-périodes au cours desquelles le couple moteur est positif, par exemple générant une fonction d'excitation à 90 Hz pour un moteur quatre cylindres tournant à 3000 tours/minute (50 Hz)) et d'autre part à amortir les vibrations correspondant à une seconde fonction d'excitation de torsion (les sous-chemins en traits pointillés : 31, 41, 32, 42, pouvant correspondre en particulier aux sous-périodes au cours desquelles le couple moteur est négatif ou nul, par exemple générant une fonction d'excitation à 110 Hz pour un moteur quatre cylindres tournant à 3000 tours/minute (50 Hz)). Le dispositif selon l'invention permet ainsi d'absorber au mieux les vibrations correspondants à chacune des fonctions d'excitation de torsion correspondant à un moteur particulier.

On peut notamment utiliser la méthode de H. Denman pour déterminer les chemins adéquats correspondant à chacune des sous périodes, par exemple des portions d'épicycloïde. On peut également utiliser tout autre méthode adaptée.

L'invention peut également être mise en oeuvre en décomposant la période d'oscillation du pendule non pas en deux sous-périodes, mais selon une décomposition plus fine de trois ou plus sous-périodes, après une analyse expérimentale de l'excitation de torsion correspondant un moteur à explosion donné.

La figure 3 correspond à la position d'équilibre d'un pendule dit à fils parallèles, les droites 18 et 20 joignant perpendiculairement, respectivement un point de contact de l'un des éléments de roulement à son axe de roulement étant parallèles. L'homme du métier pourra toutefois, sans sortir du cadre de l'invention, mettre en oeuvre cette invention selon différents modes de réalisation ou variantes, par exemple pour un pendule à fils convergents, ou divergents, en utilisant éventuellement des éléments de roulement à deux diamètres. Il pourra également utiliser des masselottes solidaires sans élément de liaison, portant leurs chemins de contact avec les éléments de roulement sur un ou plusieurs de leurs bords, utiliser trois et/ou plus de trois éléments de roulement par pendule, et/ou toute caractéristique connue de l'état de la technique.

## Revendications

1. Dispositif d'amortissement de torsion destiné à être relié à un moteur à explosion, ce dispositif comprenant au moins une première masselotte (4) pendulaire à oscillation périodique montée mobile sur un support (2) mobile en rotation autour d'un axe, et au moins deux éléments de roulement (12, 14), chacun d'entre eux étant en contact roulant avec un chemin (31, 131, 32, 132) sur un bord solidaire de la première masselotte (4) d'une part et avec un chemin (41, 141, 42, 142) sur un bord du support (2) d'autre part, chacun de ces chemins comprenant au moins deux sous-chemins jointifs (31, 131, 41, 141, 32, 132, 42, 142) de part et d'autre d'un point de jonction (A1, D1, A2, D2), respectivement à gauche et à droite de ce point de jonction, les deux sous-chemins d'un même chemin étant non symétriques;
**caractérisé en ce que :**
- les deux sous-chemins à gauche (131, 132) sur les bords solidaires de la première masselotte sont superposables deux à deux par translation et/ou rotation autour de l'axe;
- les deux sous-chemins à droite (31, 32) sur les bords solidaires de la première masselotte sont superposables deux à deux par translation et/ou rotation autour de l'axe;
- les deux sous-chemins à gauche (41, 42) sur les bords du support sont superposables deux à deux par translation et/ou rotation autour de l'axe;
- les deux sous-chemins à droite (141, 142) sur les bords du support sont superposables deux à deux par translation et/ou rotation autour de l'axe;
- les deux sous-chemins à gauche (131, 132) sur les bords solidaires de la première masselotte, et les deux sous-chemins à droite (141, 142) sur les bords du support sont conformés pour amortir les vibrations de torsion correspondant, pour une vitesse de rotation donnée du support (2), à une première fonction périodique d'excitation en torsion générée par le moteur pendant une première sous-période de chaque période moteur,
- les deux sous-chemins à droite (31, 32) sur les bords solidaires de la première masselotte, et les deux sous-chemins à gauche (41, 42) sur les bords du support sont conformés pour amortir les vibrations de torsion correspondant, pour la même vitesse de rotation du support (2), à une deuxième fonction périodique d'excitation en torsion générée par le moteur pendant une deuxième sous-période de chaque période moteur, adjacente à la première sous-période, la première et la seconde fonction périodique présentant des périodes différentes pour cette même vitesse de rotation du support (2).

2. Dispositif selon la revendication 1, dans lequel chacune des première et deuxième fonctions périodiques d'excitation est une fonction sinusoïdale.

3. Dispositif selon la revendication 1 ou 2, dans lequel chacun des sous-chemins (31, 131, 41, 141, 32, 132, 42, 142) est formé par une portion d'épicycloïde.

4. Dispositif selon l'une quelconque des revendications 1 à 3, dans lequel chacun des points de jonction (A1, D1, A2, D2) est un point de contact à l'équilibre d'un élément de roulement (12, 14) avec la première masselotte (4) ou avec le support (2), lorsque le support est entraîné en rotation à vitesse constante.

5. Dispositif selon l'une quelconque des revendications 1 à 4, dans lequel la première sous période est un intervalle de temps de durée maximale compris dans une période moteur au cours duquel le couple moteur est positif ou nul, et la deuxième sous-période est un intervalle de temps de durée maximale compris dans une période moteur au cours duquel le couple moteur est négatif.

6. Dispositif selon l'une quelconque des revendications 1 à 4, dans lequel la première et la seconde fonction périodique d'excitation présentent, pour une pluralité de vitesses de rotation du support (2), des fréquences respectives telles que le rapport des fréquences de la première et la deuxième fonction périodique d'excitation, à vitesse de rotation du support identique, est compris entre 0,66 et 0,97.

7. Dispositif selon la revendication 6, dans lequel, pour un moteur à n cylindres lorsque le moteur et le support (2) tournent à une même fréquence de 50 Hz, la première fonction périodique d'excitation est de fréquence comprise entre 40 n/2 et 49 n/2 et la deuxième fonction périodique est de fréquence comprise entre 51 n/2 et 60 n/2 Hz.

8. Dispositif selon l'une quelconque des revendications 1 à 7, dans lequel chacun des éléments de roulement (12, 14) possède un axe de roulement, et les droites (18, 20) joignant perpendiculairement un point de contact d'un élément de roulement (A1, A2, D1, D2) à l'axe de roulement correspondant sont parallèles.

9. Dispositif selon l'une quelconque des revendications 1 à 7, dans lequel chacun des éléments de roulement (12, 14) possède un axe de roulement, et les droites joignant perpendiculairement un point de contact d'un élément de roulement à l'axe de roulement correspondant sont convergentes.

10. Dispositif selon l'une quelconque des revendications 1 à 9, comprenant une seconde masselotte (6) pendulaire à oscillation périodique, solidaire de la première masselotte (4) et également montée mobile sur les deux éléments de roulement (12, 14) de façon à ce que le support (2) soit intercalé entre les première et seconde masselottes, chaque élément de roulement (12, 14) étant en contact roulant avec d'une part un chemin sur un bord solidaire de la seconde masselotte, superposable et symétrique avec un chemin sur un bord solidaire de la première masselotte, et d'autre part avec le chemin correspondant sur un bord du support.

11. Dispositif selon l'une quelconque des revendications 1 à 10, dans lequel chacune des masselottes comprenant une seconde masselotte (6) pendulaire à oscillation périodique, solidaire de la première masselotte (4) et également montée mobile sur les deux éléments de roulement (12, 14) de façon à ce que le support soit intercalé entre les première et seconde masselottes chacun des éléments de roulement (12, 14) comprenant une première partie cylindrique de section circulaire ayant un premier diamètre, pour le contact roulant avec la première masselotte, une seconde partie cylindrique de section circulaire de second diamètre égal au premier diamètre, pour le contact roulant avec la seconde masselotte, et une troisième partie cylindrique de section circulaire, de troisième diamètre différent du premier diamètre, intercalée entre la première et la seconde partie cylindrique, pour le contact roulant avec le support.

12. Embrayage comprenant un dispositif d'amortissement de torsion, **caractérisé en ce que** ce dispositif est selon l'une quelconque des revendications 1 à 10.

## Patentansprüche

1. Torsionsdämpfungsvorrichtung, die dazu bestimmt ist, mit einem Explosionsmotor verbunden zu werden, wobei diese Vorrichtung wenigstens eine periodische Schwingungen ausführende erste Pendelmasse (4), die beweglich auf einem um eine Achse drehbeweglichen Träger (2) angebracht ist, und wenigstens zwei Wälzelemente (12, 14), wobei sich jedes von ihnen in Rollkontakt mit einer Bahn (31, 131, 32, 132) auf einem mit der ersten Pendelmasse (4) fest verbundenen Rand einerseits und mit einer Bahn (41, 141, 42, 142) auf einem Rand des Trägers (2) andererseits befindet, aufweist, wobei jede dieser Bahnen wenigstens zwei aneinander angrenzende Teilbahnen (31, 131, 41, 141, 32, 132, 42, 142) beiderseits eines Verbindungspunktes (A1, D1, A2, D2) links bzw. rechts von diesem Verbindungspunkt aufweist, wobei die zwei Teilbahnen ein und derselben Bahn nicht symmetrisch sind;
**dadurch gekennzeichnet, dass**
- die zwei linken Teilbahnen (131, 132) auf den mit der ersten Pendelmasse fest verbundenen Rändern durch Translation und/oder Drehung um die Achse paarweise in Deckung bringbar sind;
- die zwei rechten Teilbahnen (31, 32) auf den mit der ersten Pendelmasse fest verbundenen Rändern durch Translation und/oder Drehung um die Achse paarweise in Deckung bringbar sind;
- die zwei linken Teilbahnen (41, 42) auf den Rändern des Trägers durch Translation und/oder Drehung um die Achse paarweise in Deckung bringbar sind;
- die zwei rechten Teilbahnen (141, 142) auf den Rändern des Trägers durch Translation und/oder Drehung um die Achse paarweise in Deckung bringbar sind;
- die zwei linken Teilbahnen (131, 132) auf den mit der ersten Pendelmasse fest verbundenen Rändern und die zwei rechten Teilbahnen (141, 142) auf den Rändern des Trägers dazu ausgebildet sind, die Torsionsschwingungen zu dämpfen, die für eine gegebene Drehzahl des Trägers (2) einer ersten periodischen Torsionsanregungsfunktion entsprechen, die von dem Motor während einer ersten Teilperiode jeder Motorperiode erzeugt wird,
- die zwei rechten Teilbahnen (31, 32) auf den mit der ersten Pendelmasse fest verbundenen Rändern und die zwei linken Teilbahnen (41, 42) auf den Rändern des Trägers dazu ausgebildet sind, die Torsionsschwingungen zu dämpfen, die für dieselbe Drehzahl des Trägers (2) einer zweiten periodischen Torsionsanregungsfunktion entsprechen, die von dem Motor während einer zweiten Teilperiode jeder Motorperiode erzeugt wird, die der ersten Teilperiode benachbart ist, wobei die erste und die zweite periodische Funktion für diese gleiche Drehzahl des Trägers (2) unterschiedliche Perioden aufweisen.

2. Vorrichtung nach Anspruch 1, wobei die erste und die zweite periodische Anregungsfunktion jeweils Sinusfunktionen sind.

3. Vorrichtung nach Anspruch 1 oder 2, wobei jede der Teilbahnen (31, 131, 41, 141, 32, 132, 42, 142) von einem Epizykloidenabschnitt gebildet wird.

4. Vorrichtung nach einem der Ansprüche 1 bis 3, wobei jeder der Verbindungspunkte (A1, D1, A2, D2) ein Kontaktpunkt im Gleichgewicht eines Wälzelements (12, 14) mit der ersten Pendelmasse (4) oder mit dem Träger (2) ist, wenn der Träger mit konstanter Drehzahl drehend angetrieben wird.

5. Vorrichtung nach einem der Ansprüche 1 bis 4, wobei die erste Teilperiode ein in einer Motorperiode enthaltenes Zeitintervall von maximaler Dauer ist, während dem das Motordrehmoment positiv oder null ist, und die zweite Teilperiode ein in einer Motorperiode enthaltenes Zeitintervall von maximaler Dauer ist, während dem das Motordrehmoment negativ ist.

6. Vorrichtung nach einem der Ansprüche 1 bis 4, wobei die erste und die zweite periodische Anregungsfunktion für mehrere Drehzahlen des Trägers (2) solche jeweilige Frequenzen aufweisen, dass das Verhältnis der Frequenzen der ersten und der zweiten periodischen Anregungsfunktion bei identischer Drehzahl des Trägers zwischen 0,66 und 0,97 liegt.

7. Vorrichtung nach Anspruch 6, wobei für einen Motor mit n Zylindern, wenn der Motor und der Träger (2) mit ein und derselben Frequenz von 50Hz drehen, die erste periodische Anregungsfunktion eine Frequenz aufweist, die zwischen 40 n/2 und 49 n/2 liegt, und die zweite periodische Funktion eine Frequenz aufweist, die zwischen 51 n/2 und 60 n/2 Hz liegt.

8. Vorrichtung nach einem der Ansprüche 1 bis 7, wobei jedes der Wälzelemente (12, 14) eine Wälzachse besitzt und die Geraden (18, 20), welche einen Kontaktpunkt eines Wälzelements (A1, A2, D1, D2) mit der entsprechenden Wälzachse verbinden, parallel sind.

9. Vorrichtung nach einem der Ansprüche 1 bis 7, wobei jedes der Wälzelemente (12, 14) eine Wälzachse besitzt und die Geraden, welche einen Kontaktpunkt eines Wälzelements mit der entsprechenden Wälzachse verbinden, konvergent sind.

10. Vorrichtung nach einem der Ansprüche 1 bis 9, welche eine periodische Schwingungen ausführende zweite Pendelmasse (6) aufweist, die mit der ersten Pendelmasse (4) fest verbunden ist und ebenfalls beweglich auf den zwei Wälzelementen (12, 14) angebracht ist, derart, dass der Träger (2) zwischen der ersten und der zweiten Pendelmasse angeordnet ist, wobei sich jedes Wälzelement (12, 14) in Rollkontakt mit einerseits einer Bahn auf einem mit der zweiten Pendelmasse fest verbundenen Rand, die mit einer Bahn auf einem mit der ersten Pendelmasse fest verbundenen Rand in Deckung bringbar und zu dieser symmetrisch ist, und andererseits mit der entsprechenden Bahn auf einem Rand des Trägers befindet.

11. Vorrichtung nach einem der Ansprüche 1 bis 10, wobei jede der Pendelmassen eine periodische Schwingungen ausführende zweite Pendelmasse (6) aufweist, die mit der ersten Pendelmasse (4) fest verbunden ist und ebenfalls beweglich auf den zwei Wälzelementen (12, 14) angebracht ist, derart, dass der Träger zwischen der ersten und der zweiten Pendelmasse angeordnet ist, wobei jedes der Wälzelemente (12, 14) einen ersten zylindrischen Teil mit kreisförmigem Querschnitt, der einen ersten Durchmesser aufweist, für den Rollkontakt mit der ersten Pendelmasse, einen zweiten zylindrischen Teil mit kreisförmigem Querschnitt mit einem zweiten Durchmesser, der gleich dem ersten Durchmesser ist, für den Rollkontakt mit der zweiten Pendelmasse, und einen dritten zylindrischen Teil mit kreisförmigem Querschnitt mit einem von dem ersten Durchmesser verschiedenen dritten Durchmesser, der zwischen dem ersten und dem zweiten zylindrischen Teil angeordnet ist, für den Rollkontakt mit dem Träger aufweist.

12. Kupplung, welche eine Torsionsdämpfungsvorrichtung aufweist, **dadurch gekennzeichnet, dass** diese Vorrichtung eine Vorrichtung nach einem der Ansprüche 1 bis 10 ist.

## Claims

1. Torsion damping device intended to be connected to an internal combustion engine, this device comprising at least one first pendulum flyweight (4) with periodic oscillation mounted movably on a support (2) which can rotate about an axis, and at least two rolling elements (12, 14), each of them being in rolling contact with a path (31, 131, 32, 132) on an edge integral with the first flyweight (4) on the one hand and with a path (41, 141, 42, 142) on an edge of the support (2) on the other hand, each of these paths comprising at least two contiguous sub-paths (31, 131, 41, 141, 32, 132, 42, 142) on either side of a junction point (A1, D1, A2, D2), respectively to the left and to the right of this junction point, the two sub-paths of one and the same path being non-symmetrical;
**characterized in that**:
- the two left sub-paths (131, 132) on the edges integral with the first flyweight are superposable in pairs by translation and/or rotation about the axis;
- the two right sub-paths (31, 32) on the edges integral with the first flyweight are superposable in pairs by translation and/or rotation about the axis;
- the two left sub-paths (41, 42) on the edges of the support are superposable in pairs by translation and/or rotation about the axis;
- the two right sub-paths (141, 142) on the edges of the support are superposable in pairs by translation and/or rotation about the axis;
- the two left sub-paths (131, 132) on the edges integral with the first flyweight and the two right sub-paths (141, 142) on the edges of the support are configured to damp the torsion vibrations corresponding, for a given speed of rotation of the support (2), to a first periodic excitation function in torsion generated by the engine during a first sub-period of each engine period,
- the two right sub-paths (31, 32) on the edges integral with the first flyweight and the two left sub-paths (41, 42) on the edges of the support are configured to damp the torsion vibrations corresponding, for the same speed of rotation of the support (2), to a second periodic excitation function in torsion generated by the engine during a second sub-period of each engine period, adjacent to the first sub-period, the first and the second periodic function having different periods for the same speed of rotation of the support (2).

2. Device according to Claim 1, in which each of the first and second periodic excitation functions is a sinusoidal function.

3. Device according to Claim 1 or 2, in which each of the sub-paths (31, 131, 41, 141, 32, 132, 42, 142) is formed by an epicycloid portion.

4. Device according to any one of Claims 1 to 3, in which each of the junction points (A1, D1, A2, D2) is a point of contact, at equilibrium of a rolling element (12, 14), with the first flyweight (4) or with the support (2) when the support is rotated at a constant speed.

5. Device according to any one of Claims 1 to 4, in which the first sub-period is a time interval of maximum duration within an engine period during which the engine torque is positive or zero, and the second sub-period is a time interval of maximum duration within an engine period during which the engine torque is negative.

6. Device according to any one of Claims 1 to 4, in which the first and the second periodic excitation function have, for a plurality of speeds of rotation of the support (2), respective frequencies such that the ratio of the frequencies of the first and the second periodic excitation function, at an identical speed of rotation of the support, is between 0.66 and 0.97.

7. Device according to Claim 6, in which, for an engine with n cylinders when the engine and the support (2) rotate at the same frequency of 50 Hz, the first periodic excitation function is of a frequency between 40 n/2 and 49 n/2 and the second periodic function is of a frequency between 51 n/2 and 60 n/2 Hz.

8. Device according to any one of Claims 1 to 7, in which each of the rolling elements (12, 14) has a rolling axis, and the straight lines (18, 20) perpendicularly joining a point of contact (A1, A2, D1, D2) of a rolling element to the corresponding rolling axis are parallel.

9. Device according to any one of Claims 1 to 7, in which each of the rolling elements (12, 14) has a rolling axis, and the straight lines perpendicularly joining a point of contact of a rolling element to the corresponding rolling axis are convergent.

10. Device according to any one of Claims 1 to 9, comprising a second pendulum flyweight (6) with periodic oscillation that is secured to the first flyweight (4) and also mounted movably on the two rolling elements (12, 14) in such a way that the support (2) is interposed between the first and second flyweights, each rolling element (12, 14) being in rolling contact with, on the one hand, a path on an edge integral with the second flyweight, superposable and symmetrical with a path on an edge integral with the first flyweight, and, on the other hand, with the corresponding path on an edge of the support.

11. Device according to any one of Claims 1 to 10, in which each of the flyweights comprises a second pendulum flyweight (6) with periodic oscillation that is secured to the first flyweight (4) and also mounted movably on the two rolling elements (12, 14) in such a way that the support is interposed between the first and second flyweights, each of the rolling elements (12, 14) comprising a first cylindrical part of circular cross section having a first diameter, for rolling contact with the first flyweight, a second cylindrical part of circular cross section of second diameter equal to the first diameter, for rolling contact with the second flyweight, and a third cylindrical part of circular cross section of third diameter different from the first diameter, interposed between the first and the second cylindrical part, for rolling contact with the support.

12. Clutch comprising a torsion damping device, **characterized in that** this device is according to any one of Claims 1 to 10.
